(19) Europäisches Patentamt
European Patent Office
Office européen des brevets

(11) EP 3 387 035 B1

# (12) EUROPÄISCHE PATENTSCHRIFT

(45) Veröffentlichungstag und Bekanntmachung des Hinweises auf die Patenterteilung:
**04.05.2022 Patentblatt 2022/18**

(21) Anmeldenummer: **16809699.8**

(22) Anmeldetag: **06.12.2016**

(51) Internationale Patentklassifikation (IPC):
***C08G 18/48*** (2006.01) ***C08G 18/76*** (2006.01)
***C08G 64/18*** (2006.01) ***C08G 64/34*** (2006.01)
***C08G 65/26*** (2006.01) ***C08G 18/16*** (2006.01)
***C08G 18/18*** (2006.01) ***C08G 18/24*** (2006.01)
***C08G 18/40*** (2006.01) ***C08G 18/44*** (2006.01)

(52) Gemeinsame Patentklassifikation (CPC):
**C08G 18/44; C08G 18/16; C08G 18/18; C08G 18/24; C08G 18/40; C08G 18/48; C08G 18/76; C08G 64/183; C08G 64/34; C08G 65/26**

(86) Internationale Anmeldenummer:
**PCT/EP2016/079817**

(87) Internationale Veröffentlichungsnummer:
**WO 2017/097729 (15.06.2017 Gazette 2017/24)**

## (54) POLYURETHANSCHAUMSTOFFE BASIEREND AUF POLYETHERCARBONATPOLYOLEN

POLYURETHANE FOAMS BASED ON POLYETHER CARBONATE POLYOLS

MOUSSES DE POLYURETHANE À BASE DE POLYETHERCARBONATPOLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2015 EP 15198734**
**11.11.2016 EP 16198306**

(43) Veröffentlichungstag der Anmeldung:
**17.10.2018 Patentblatt 2018/42**

(73) Patentinhaber: **Covestro Intellectual Property GmbH & Co. KG**
**51373 Leverkusen (DE)**

(72) Erfinder:
- **KLESCZEWSKI, Bert**
**51069 Köln (DE)**
- **HOFMANN, Jörg**
**47800 Krefeld (DE)**
- **MALSCH, Karsten**
**42477 Radevormwald (DE)**
- **WELSCH, Nicole**
**51067 Köln (DE)**
- **LORENZ, Klaus**
**41539 Dormagen (DE)**
- **NEFZGER, Hartmut**
**50259 Pulheim (DE)**
- **LAEMMERHOLD, Kai**
**52078 Aachen (DE)**

(74) Vertreter: **Levpat**
**c/o Covestro AG**
**Gebäude 4825**
**51365 Leverkusen (DE)**

(56) Entgegenhaltungen:
**WO-A1-2008/058913** **WO-A1-2015/014732**
**WO-A1-2015/162125**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 387 035 B1

## Beschreibung

Die vorliegende Erfindung betrifft ein Verfahren zur Herstellung von Polyurethanweichschaumstoffen, durch Reaktion einer Isocyanat-Komponente mit einer gegenüber Isocyanaten reaktiven Komponente, die mindestens ein Polyethercarbonatpolyol umfasst, und wobei die Umsetzung in Gegenwart einer Komponente K erfolgt, die im weiteren näher beschrieben wird. Die Erfindung betrifft weiterhin durch das erfindungsgemäße Verfahren hergestellte Polyurethanweichschaumstoffe und deren Verwendung.

Im Rahmen einer umweltfreundlichen Ausrichtung von Produktionsprozessen ist es generell wünschenswert, CO2-basierte Ausgangsstoffe, beispielsweise in Form von Polyethercarbonatpolyolen, in relativ großen Mengen einzusetzen. Die Herstellung von Polyethercarbonatpolyolen durch katalytische Umsetzung von Alkylenoxiden (Epoxiden) und Kohlendioxid in Anwesenheit von H-funktionellen Starterverbindungen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat, im folgenden auch als cPC bezeichnet, oder für R = H Ethylencarbonat, im folgenden auch als cEC bezeichnet).

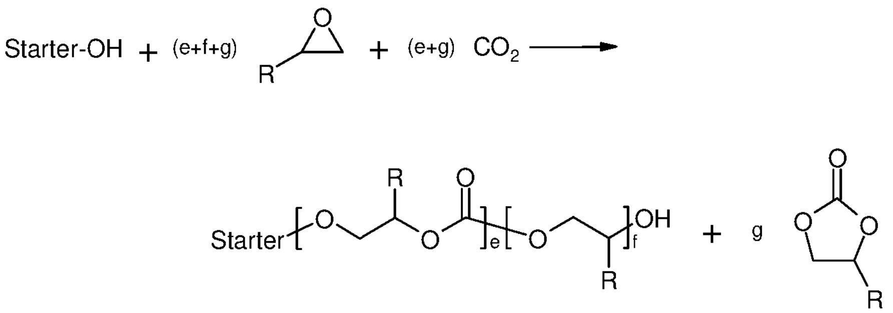

(I)

Die Herstellung von Polyurethanschaumstoffen auf Basis von Polyethercarbonatpolyolen und Isocyanaten ist bekannt (z.B. WO 2012/130760 A1, EP-A 0 222 453). Es wurde festgestellt, dass bei der Verwendung von Polyethercarbonatpolyolen zur Herstellung von Polyurethanschaumstoffen die resultierenden Produkte cyclisches Propylencarbonat enthalten, welches beispielsweise durch Emissionsmessungen am Polyurethanweichschaumstoff nachgewiesen werden kann.

Daher bestand die Aufgabe der vorliegenden Erfindung darin, ein Verfahren zur Herstellung von Polyurethanweichschaumstoffen bereitzustellen, welches zu Polyurethanweichschaumstoffen mit einer reduzierten Emission von cyclischem Propylencarbonat führt.

Überraschenderweise wurde diese Aufgabe gelöst durch ein Verfahren zur Herstellung von Polyurethanweichschaumstoffen mit einer Rohdichte gemäß DIN EN ISO 3386-1-98 im Bereich ≥ 16 bis ≤ 60 kg/$m^3$, durch Umsetzung von

Komponente A,

wobei Komponente A die folgende Zusammensetzung aufweist:

- A1 ≥ 40 bis ≤ 100 Gew.-Teile, bevorzugt ≥ 60 bis ≤ 100 Gew.-Teile, besonders bevorzugt bevorzugt ≥ 80 bis ≤ 100 Gew.-Teile eines oder mehrerer Polyethercarbonatpolyole mit einer Hydroxylzahl gemäß DIN 53240 von ≥ 20 mg KOH/g bis ≤ 120 mg KOH/g,
- A2 ≤ 60 bis ≥ 0 Gew.-Teile, bevorzugt ≤ 40 bis ≥ 0 Gew.-Teile, besonders bevorzugt ≤ 20 bis ≥ 0 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,
- A3 ≤ 20 bis ≥ 0 Gew.-Teilen, bezogen auf die Summe der Gew.-Teile der Komponenten A1 und A2, eines oder mehrerer Polyetherpolyole mit einer Hydroxylzahl gemäß DIN 53240 ≥ 20 mg KOH/g bis ≤ 250 mg KOH/g, und

einem Gehalt an Ethylenoxid von > 60 Gew.-%, wobei die Polyetherpolyole A3 frei von Carbonateinheiten sind,

A4 ≤ 40 bis ≥ 0 Gew.-Teilen, bezogen auf die Summe der Gew.-Teile der Komponenten A1 und A2, eines oder mehrerer Polymerpolyole, PHD-Polyole und/oder PIPA-Polyole,

A5 ≤ 40 bis ≥ 0 Gew.-Teilen, bezogen auf die Summe der Gew.-Teile der Komponenten A1 und A2, Polyole, die nicht unter die Definition der Komponenten A1 bis A4 fallen,

B gegebenenfalls B1) Katalysatoren und/oder, B2) Hilfs- und Zusatzstoffen

C Wasser und/oder physikalischen Treibmitteln,

mit

D Di und/oder Polyisocyanaten,

wobei die Herstellung bei einer Kennzahl von ≥ 90 bis ≤ 120 erfolgt und wobei alle Gewichtsteilangaben der Komponenten A1, A2, A3, A4, A5 so normiert sind, dass die Summe der Gewichtsteile A1 + A2 in der Zusammensetzung 100 ergibt,

dadurch gekennzeichnet, dass die Herstellung in Gegenwart einer Komponente K erfolgt, wobei Komponente K ausgewählt ist aus einer oder mehreren Verbindungen der Gruppe bestehend aus

K1 Ester von ein- oder mehrbasigen Carbonsäuren, deren (erste) Dissoziation einen pKs-Wert von 0,5 bis 4,0 aufweist,

K2 Mono-, Di- und Polysulfonate von mono- und mehrfunktionellen Alkoholen, und

K3 eine oder mehrere Verbindungen ausgewählt aus der Gruppe bestehend aus

K 3.1 Ester der Phosphorsäure, Phosphonsäure, Phosphorigen Säure, Phosphinsäure, Phosphonigsäure und Phosphinigsäure, wobei diese Ester jeweils keine P-OH Gruppe enthalten,

K3.2 oligomere Alkylphosphate der allgemeinen Formel (II),

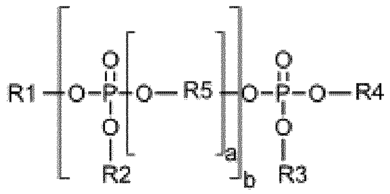

(II)

wobei

a eine ganze Zahl von 1 bis 10 ist,

b eine ganze Zahl von 1 bis 10 ist,

R1, R2, R3, R4 Alkylgruppen mit mindestens einem C-Atom sind, bevorzugt C1 bis C6-Alkyl sind, wobei R1, R2, R3, R4 gleich oder unabhängig voneinander verschieden sind, und

R5 eine lineare Alkylengruppe mit mindestens zwei C-Atomen oder eine verzweigte Alkylengruppe mit mindestens drei C-Atomen ist, bevorzugt eine lineare Alkylengruppe mit zwei bis zehn C-Atomen oder eine verzweigte Alkylengruppe mit drei bis zehn C-Atomen ist,

und

K3.3 oligomere Alkylphosphate der allgemeinen Formel (III),

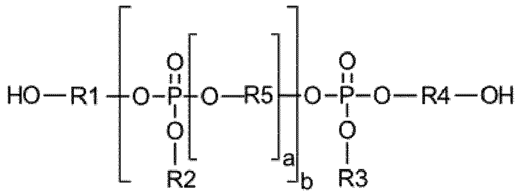

(III),

wobei

a eine ganze Zahl von 1 bis 10 ist,

b eine ganze Zahl von 1 bis 10 ist,

R1, R4, R5 lineare Alkylengruppen mit mindestens zwei C-Atomen oder verzweigte Alkylengruppen mit mindestens drei C-Atomen, bevorzugt lineare Alkylengruppen mit zwei bis zehn C-Atomen oder verzweigte Alkylengruppen mit drei bis zehn C-Atomen sind, wobei R1, R4, R5 gleich oder unabhängig voneinander verschieden sind,
R2, R3 Alkylgruppen mit mindestens einem C-Atom sind, bevorzugt C1 bis C6-Alkyl sind, wobei R2 und R3 gleich oder unabhängig voneinander verschieden sind,
und wobei Komponente K bevorzugt in einer Menge von ≥ 1,0 bis ≤ 5,0 Gew.-Teile, besonders bevorzugt von ≥ 2,0 bis ≤ 5,0 Gew.-Teile eingesetzt wird, wobei sich alle Gewichtsteilangaben der Komponente K auf die Summe der Gewichtsteile der Komponenten A1 + A2 = 100 Gewichtsteile beziehen.

Die Komponenten A1 bis A5 beziehen sich jeweils auf "eine oder mehrere" der genannten Verbindungen. Bei Verwendung mehrerer Verbindungen einer Komponente entspricht die Mengenangabe der Summe der Gewichtsteile der Verbindungen.

In einer besonders bevorzugten Ausführungsform enthält Komponente A

A1 ≥ 65 bis ≤ 75 Gew.-Teile, höchst bevorzugt ≥ 68 bis ≤ 72 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem CO2-Gehalt von 15 bis 25 Gew.-%, und

A2 ≤ 35 bis ≥ 25 Gew.-Teile, höchst bevorzugt ≤ 32 bis ≥ 28 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,

wobei die Komponente A vorzugsweise frei ist von Komponente A3 und/oder A4.

In einer anderen Ausführungsform umfasst Komponente A

A1 ≥ 65 bis ≤ 75 Gew.-Teile, bevorzugt ≥ 68 bis ≤ 72 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem $CO_2$-Gehalt von 15 bis 25 Gew.-%, und

A2 ≤ 35 bis ≥ 25 Gew.-Teile, bevorzugt ≤ 32 bis ≥ 28 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,

A3 ≤ 20 bis ≥ 2 Gew.-Teile, bevorzugt ≤ 10 bis ≥ 2 Gew.-Teile, bezogen auf die Summe der Gew.-Teile der Komponenten A1 und A2, eines oder mehrerer Polyetherpolyole mit einer Hydroxylzahl gemäß DIN 53240 ≥ 20 mg KOH/g bis ≤ 250 mg KOH/g, und einem Gehalt an Ethylenoxid von > 60 Gew.-%, wobei die Polyetherpolyole A3 frei von Carbonateinheiten sind,

wobei die Komponente A vorzugsweise frei ist von Komponente A4.

In einer weiteren Ausführungsform umfasst Komponente A

A1 ≥ 40 bis ≤ 100 Gew.-Teile, bevorzugt ≥ 60 bis ≤ 100 Gew.-Teile, besonders bevorzugt ≥ 80 bis ≤ 100 Gew.-Teile, höchst bevorzugt ≥ 65 bis ≤ 75 Gew.-Teile eines oder mehrerer Polyethercarbonatpolyole mit einer Hydroxylzahl gemäß DIN 53240 von ≥ 20 mg KOH/g bis ≤ 120 mg KOH/g sowie vorzugsweise einem $CO_2$-Gehalt von 15 bis 25 Gew.-%, und

A2 ≤ 60 bis ≥ 0 Gew.-Teile, bevorzugt ≤ 40 bis ≥ 0 Gew.-Teile, besonders bevorzugt ≤ 20 bis ≥ 0 Gew.-Teile, höchst bevorzugt ≤ 35 bis ≥ 25 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,

A4 ≤ 40 bis ≥ 0,01 Gew.-Teile, bevorzugt ≤ 20 bis ≥ 0,01 Gew.-Teile, besonders bevorzugt ≤ 20 bis ≥ 1 Gew.-Teile, höchst bevorzugt ≤ 20 bis ≥ 2 Gew.-Teile, bezogen auf die Summe der Gew.-Teile der Komponenten A1 und A2, eines oder mehrerer Polymerpolyole, PHD-Polyole und/oder PIPA-Polyole,

A5 ≤ 40 bis ≥ 0 Gew.-Teilen, bezogen auf die Summe der Gew.-Teile der Komponenten A1 und A2, Polyole, die nicht unter die Definition der Komponenten A1 bis A4 fallen,

wobei die Komponente A vorzugsweise frei ist von Komponente A3.

Dabei sind die angegebenen Bereiche und Vorzugsbereiche der Komponenten A1, A2, A4 und A5 miteinander frei kombinierbar.

Im Folgenden sind die im erfindungsgemäßen Verfahren eingesetzten Komponenten näher beschrieben.

Komponente A1

Die Komponente A1 umfasst ein Polyethercarbonatpolyol mit einer Hydroxylzahl (OH-Zahl) gemäß DIN 53240 von ≥ 20 mg KOH/g bis ≤ 120 mg KOH/g, vorzugsweise von ≥ 20 mg KOH/g bis ≤ 100 mg KOH/g, besonders bevorzugt von ≥ 25 mg KOH/g bis ≤ 90 mg KOH/g, welches erhältlich ist durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen CO2-Gehalt von 15 bis 25 Gew.-% aufweist. Bevorzugt umfasst Komponente A1 ein Polyethercarbonatpolyol, welches erhältlich ist durch Copolymerisation von ≥ 2 Gew.-% bis ≤ 30 Gew.-% Kohlendioxid und ≥ 70 Gew.-% bis ≤ 98 Gew.-% einem oder mehreren Alkylenoxiden, in Gegenwart eines oder mehrerer H-funktioneller Startermoleküle mit einer durchschnittlichen Funktionalität von ≥ 1 bis ≤ 6, bevorzugt von ≥ 1 bis ≤ 4, besonders bevorzugt von ≥ 2 bis ≤ 3. Unter "H-funktionell" wird im Sinne der Erfindung eine Starterverbindung verstanden, die gegenüber Alkoxylierung aktive H-Atome aufweist.

Vorzugsweise erfolgt die Copolymerisation von Kohlendioxid und einem oder mehreren Alkylenoxiden in Gegenwart mindestens eines DMC-Katalysators (Doppelmetallcyanid-Katalysators).

Vorzugsweise weisen die erfindungsgemäß eingesetzten Polyethercarbonatpolyole zwischen den Carbonatgruppen auch Ethergruppen auf, was in Formel (IV) schematisch dargestellt wird. In dem Schema gemäß Formel (IV) steht R für einen organischen Rest wie Alkyl, Alkylaryl oder Aryl, der jeweils auch Heteroatome wie beispielsweise O, S, Si usw. enthalten kann, e und f stehen für eine ganzzahlige Zahl. Das im Schema gemäß Formel (IV) gezeigte Polyethercarbonatpolyol soll lediglich so verstanden werden, dass sich Blöcke mit der gezeigten Struktur im Polyethercarbonatpolyol prinzipiell wiederfinden können, die Reihenfolge, Anzahl und Länge der Blöcke aber variieren kann und nicht auf das in Formel (IV) gezeigte Polyethercarbonatpolyol beschränkt ist. In Bezug auf Formel (IV) bedeutet dies, dass das Verhältnis von e/f bevorzugt von 2 : 1 bis 1 : 20, besonders bevorzugt von 1,5 : 1 bis 1 : 10 beträgt.

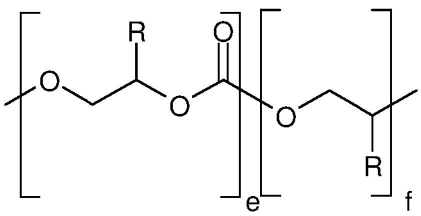

(IV)

Der Anteil an eingebautem $CO_2$ ("aus Kohlendioxid stammende Einheiten"; "$CO_2$-Gehalt") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von Propylencarbonat zu Polyethercarbonatpolyol kann mittels $^1$H-NMR (ein geeignetes Gerät ist von der Firma Bruker, DPX 400, 400 MHz; Pulsprogramm zg30, Wartezeit d1: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:

Cyclisches Propylencarbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm;
Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) polymer-gebundenen Carbonats (LC’) in der Reaktionsmischung wurde nach Formel (V) berechnet,

$$LC' = \frac{[F(5,1-4,8) - F(4,5)] * 102}{N} * 100\% \quad (V)$$

wobei sich der Wert für N ("Nenner" N) nach Formel (VI) berechnet:

$$N = [F(5,1-4,8) - F(4,5)] * 102 + F(4,5) * 102 + F(2,4) * 58 + 0,33 * F(1,2-1,0) * 58 + 0,25 * F(1,6-1,52) * 146 \quad (VI)$$

Dabei gelten folgende Abkürzungen:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).
Der Gewichtsanteil (in Gew.-%) an cyclischem Carbonat (CC') in der Reaktionsmischung wurde nach Formel (VII) berechnet,

$$CC' = \frac{F(4,5) * 102}{N} * 100\% \qquad \text{(VII)}$$

wobei sich der Wert für N nach Formel (VI) berechnet.
Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F = 44/(44+58) umgerechnet. Die Angabe des $CO_2$-Gehalts im Polyethercarbonatpolyol ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol, soweit vorhanden) sowie aus der Reaktion des Starters mit Epoxid resultiert, das unter $CO_2$-freien Bedingungen zugegeben wurde, wurde hierbei nicht berücksichtigt).
Beispielsweise umfasst die Herstellung von Polyethercarbonatpolyolen gemäß A1, indem:

(a) eine H-funktionelle Starterverbindung oder ein Gemisch aus mindestens zwei H-funktionellen Starterverbindungen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Starterverbindung oder dem Gemisch von mindestens zwei H-funktionellen Starterverbindungen vor oder nach der Trocknung zugesetzt wird,
(β) zur Aktivierung eine Teilmenge (bezogen auf die Gesamtmenge der bei der Aktivierung und Copolymerisation eingesetzten Menge an Alkylenoxiden) von einem oder mehreren Alkylenoxiden zu der aus Schritt (a) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) ein oder mehrere der Alkylenoxide und Kohlendioxid zu der aus Schritt (β) resultierenden Mischung zugesetzt werden, wobei die in Schritt (β) eingesetzten Alkylenoxide gleich oder verschieden sein können von den bei Schritt (γ) eingesetzten Alkylenoxiden.

Allgemein können zur Herstellung der Polyethercarbonatpolyole A1 Alkylenoxide (Epoxide) mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols,

wie beispielsweise Methylglycidylether, Ethylglycidylether, 2-Ethylhexylglycidylether, Allylglycidylether, Glycidylmethacrylat sowie epoxidfunktionelle Alkoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid, besonders bevorzugt Propylenoxid eingesetzt.

In einer bevorzugten Ausführungsform der Erfindung liegt der Anteil an Ethylenoxid an der insgesamt eingesetzten Menge an Propylenoxid und Ethylenoxid bei $\geq 0$ und $\leq 90$ Gew.-%, bevorzugt bei $\geq 0$ und $\leq 50$ Gew.-% und besonders bevorzugt frei von Ethylenoxid.

Als geeignete H-funktionelle Startverbindung können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und - $CO_2H$, bevorzugt sind -OH und $-NH_2$, besonders bevorzugt ist -OH. Als H-funktionelle Starterverbindung wird beispielsweise eine oder mehrere Verbindungen ausgewählt aus der Gruppe bestehend aus Wasser, ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, t-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-t-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, t-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindungen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton. In Mischungen von H-funktionellen Startern können auch dreiwertige Alkohole, wie beispielsweise Trimethylolpropan, Glycerin, Trishydroxyethylisocyanurat und Rizinusöl eingesetzt werden.

Die H-funktionellen Starterverbindungen können auch aus der Substanzklasse der Polyetherpolyole ausgewählt sein, insbesondere solchen mit einem Molekulargewicht $M_n$ im Bereich von 100 bis 4000 g/mol, vorzugsweise 250 bis 2000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Covestro Deutschland AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete

gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht $M_n$ im Bereich von 200 bis 4500 g/mol, vorzugsweise 400 bis 2500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophthalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Falls Polyetherpolyole zur Herstellung der Polyesteretherpolyole eingesetzt werden, sind Polyetherpolyole mit einem zahlenmittleren Molekulargewicht $M_n$ von 150 bis 2000 g/mol bevorzugt.

Des Weiteren können als H-funktionelle Starterverbindungen Polycarbonatpolyole (wie beispielsweise Polycarbonatdiole) eingesetzt werden, insbesondere solchen mit einem Molekulargewicht $M_n$ im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Covestro Deutschland AG verwendet werden, wie z. B. Desmophen® C 1100 oder Desmophen® C 2200.

Ebenfalls können Polyethercarbonatpolyole als H-funktionelle Starterverbindungen eingesetzt werden. Insbesondere werden Polyethercarbonatpolyole, die nach dem oben beschriebenen Verfahren hergestellt werden, eingesetzt. Diese als H-funktionelle Starterverbindungen eingesetzten Polyethercarbonatpolyole werden hierzu in einem separaten Reaktionsschritt zuvor hergestellt.

Bevorzugte H-funktionelle Starterverbindungen sind Alkohole der allgemeinen Formel (VIII),

$$HO\text{-}(CH_2)_x\text{-}OH \qquad (VIII)$$

wobei x eine Zahl von 1 bis 20, bevorzugt eine gerade Zahl von 2 bis 20 ist. Beispiele für Alkohole gemäß Formel (VIII) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (IV) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht $M_n$ im Bereich von 62 bis 4500 g/mol und insbesondere ein zahlenmittleres Molekulargewicht $M_n$ im Bereich von 62 bis 3000 g/mol, ganz besonders bevorzugt ein Molekulargewicht von 62 bis 1500 g/mol. Bevorzugt haben die Polyetherpolyole eine Funktionalität von $\geq 2$ bis $\leq 3$.

In einer bevorzugten Ausführungsform der Erfindung ist das Polyethercarbonatpolyol A1 durch Anlagerung von Kohlendioxid und Alkylenoxiden an H-funktionelle Starterverbindungen unter Verwendung von Multimetallcyanid-Katalysatoren (DMC-Katalysatoren) erhältlich. Die Herstellung von Polyethercarbonatpolyolen durch Anlagerung von Alkylenoxiden und $CO_2$ an H-funktionelle Starterverbindungen unter Verwendung von DMC-Katalysatoren ist beispielsweise aus der EP-A 0222453, WO-A 2008/013731 und EP-A 2115032 bekannt.

DMC-Katalysatoren sind im Prinzip aus dem Stand der Technik zur Homopolymerisation von Epoxiden bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO-A 97/40086, WO-A 98/16310 und WO-A 00/47649 beschrieben sind, besitzen eine sehr hohe Aktivität in der Homopolymerisation von Epoxiden und ermöglichen die Herstellung von Polyetherpolyolen und/oder Polyethercarbonatpolyolen bei sehr geringen Katalysatorkonzentrationen (25 ppm oder weniger). Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. t.-Butanol) noch einen Polyether mit einem zahlenmittlerem Molekulargewicht $M_n$ größer als 500 g/mol enthalten.

Der DMC-Katalysator wird zumeist in einer Menge von ≤ 1 Gew.-%, vorzugsweise in einer Menge von ≤ 0,5 Gew.-%, besonders bevorzugt in einer Menge von ≤ 500 ppm und insbesondere in einer Menge von ≤ 300 ppm, jeweils bezogen auf das Gewicht des Polyethercarbonatpolyols eingesetzt.

In einer bevorzugten Ausführungsform der Erfindung weist das Polyethercarbonatpolyol A1 einen Gehalt an Carbonatgruppen ("aus Kohlendioxid stammenden Einheiten"), berechnet als $CO_2$, von ≥ 2,0 und ≤ 30,0 Gew.-%, bevorzugt von ≥ 5,0 und ≤ 28,0 Gew.-% und besonders bevorzugt von ≥ 10,0 und ≤ 25,0 Gew.-% auf.

In einer weiteren Ausführungsform des erfindungsgemäßen Verfahrens weisen das oder die Polyethercarbonatpolyole gemäß A1 eine Hydroxylzahl von ≥ 20 mg KOH/g bis ≤ 250 mg KOH/g auf und sind erhältlich durch Copolymerisation von ≥ 2,0 Gew.-% bis ≤ 30,0 Gew.-% Kohlendioxid und ≥ 70 Gew.-% bis ≤ 98 Gew.-% Propylenoxid in Gegenwart eines hydroxyfunktionellen Startermoleküls, wie beispielsweise Trimethylolpropan und/oder Glycerin und/oder Propylenglykol und/oder Sorbitol. Die Hydroxylzahl kann gemäß DIN 53240 bestimmt werden.

In einer weiteren Ausführungsform wird ein Polyethercarbonatpolyol A1 eingesetzt, enthaltend Blöcke gemäß Formel (IV) wobei das Verhältnis e/f von 2 : 1 bis 1 : 20 beträgt.

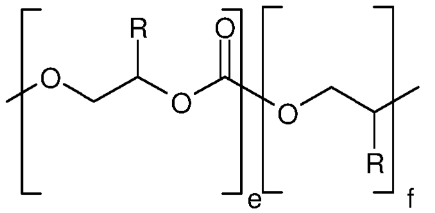

(IV)

In einer weiteren Ausführungsform der Erfindung wird Komponente A1 zu 100 Gew.-Teilen eingesetzt.

Komponente A2

Die Komponente A2 umfasst Polyetherpolyole mit einer Hydroxylzahl gemäß DIN 53240 von ≥ 20 mg KOH/g bis ≤ 250 mg KOH/g, vorzugsweise von ≥ 20 bis ≤ 112 mg KOH/g und besonders bevorzugt ≥ 20 mg KOH/g bis ≤ 80 mg KOH/g und ist frei von Carbonateinheiten. Die Herstellung der Verbindungen gemäß A2 kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Besonders bevorzugt wird ein Überschuss an Propylenoxid und/oder 1,2-Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von ≥ 2 bis ≤ 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und /oder Glycerin und/oder Trimethylolpropan und /oder Sorbitol eingesetzt.

Die Polyetherpolyole gemäß A2 weisen einen Gehalt von ≥ 0 bis ≤ 60 Gew.-%, vorzugsweise von ≥ 0 bis ≤ 40

Gew.-%, besonders bevorzugt ≥ 0 bis ≤ 25 Gew.-% an Ethylenoxid auf.

Komponente A3

Die Komponente A3 umfasst Polyetherpolyole mit einer Hydroxylzahl gemäß DIN 53240 ≥ 20 mg KOH/g bis ≤ 250 mg KOH/g, vorzugsweise von ≥ 20 bis ≤ 112 mg KOH/g und besonders bevorzugt ≥ 20 mg KOH/g bis ≤ 80 mg KOH/g.

Die Herstellung der Komponente A3 erfolgt im Prinzip analog der der Komponente A2, wobei jedoch ein Gehalt an Ethylenoxid im Polyetherpolyol von > 60 Gew.-%, bevorzugt > 65 Gew.-% eingestellt wird.

Als Alkylenoxide und H-funktionelle Starterverbindungen kommen die gleichen in Frage, wie für Komponente A2 beschrieben.

Als H-funktionelle Starterverbindungen kommen jedoch bevorzugt solche in Frage, die eine Funktionalität von ≥ 3 bis ≤ 6, besonders bevorzugt von 3 aufweisen, so dass Polyethertriole entstehen. Bevorzugte Starterverbindungen mit einer Funktionalität von 3 sind Glycerin und/oder Trimethylolpropan, besonders bevorzugt ist Glycerin.

In einer bevorzugten Ausführungsform ist die Komponente A3 ein Glycerin-gestarteter trifunktioneller Polyether mit einem Ethylenoxidanteil von 68 bis 73 Gew.-% und einer OH-Zahl von 35 bis 40 mg KOH/g.

Komponente A4

Die Komponente A4 umfasst Polymerpolyole, PHD-Polyole und PIPA-Polyole.

Polymerpolyole sind Polyole, die Anteile von durch radikalische Polymerisation geeigneter Monomere wie Styrol oder Acrylnitril in einem Basispolyol, wie z.B. einem Polyetherpolyol und/oder Polyethercabonatpolyol, erzeugten festen Polymeren enthalten.

PHD (Polyharnstoffdipsersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol und/oder Polyethercarbonatpolyol, hergestellt durch Alkoxylierung eines trifunktionellen Starters (wie beispielsweise Glycerin und/oder Trimethylolpropan), im Falle des Polyethercarbonatpolyols in Gegenwart von Kohlendioxid.. Verfahren zur Herstellung von PHD-Dispersionen sind beispielsweise beschrieben in US 4,089,835 und US 4,260,530.

Bei den PIPA-Polyolen handelt es sich um durch Polyisocyanat-Polyaddition mit Alkanolaminenmodifizierte, vorzugsweise Triethanolamin-modifizierte Polyetherpolyole und/oder Polyethercarbonatpolyole, wobei das Polyether(carbonat)polyol eine Funktionalität von 2,5 bis 4 und eine Hydroxylzahl von ≥ 3 mg KOH/g bis ≤ 112 mg KOH/g (Molekulargewicht 500 bis 18000) aufweist. Vorzugsweise ist das Polyetherpolyol "EO-capped", d.h. das Polyetherpolyol besitzt terminale Ethylenoxidgruppen. PIPA-Polyole sind in GB 2 072 204 A, DE 31 03 757 A1 und US 4 374 209 A eingehend beschrieben.

Komponente A5

Als Komponente A5 können alle dem Fachmann bekannten Polyhydroxyverbindungen eingesetzt werden, die nicht unter die Definition der Komponenten A1 bis A4 fallen, und bevorzugt eine mittlere OH-Funktionalität > 1,5 aufweisen.

Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyesterpolyole, Polythioetherpolyole oder Polyacrylatpolyole, sowie Polyetherpolyole oder Polycarbonatpolyole, die nicht unter die Definition der Komponenten A1 bis A4 fallen, sein. Es können z.B. auch Ethylendiamin und Triethanolamin gestartete Polyether eingesetzt werden. Diese Verbindungen zählen nicht zu den Verbindungen gemäß der Definition der Komponente B2.

Komponente B

Als Katalysatoren gemäß der Komponente B 1 werden vorzugsweise

a) aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) und/oder
b) Zinn(II)-Salze von Carbonsäuren
eingesetzt.

Es werden insbesondere die Zinn(II)-Salze von Carbonsäuren eingesetzt, wobei die jeweils zugrundeliegende Carbonsäure von 2 bis 24Kohlenstoffatome aufweist. Beispielsweise werden als Zinn(II)-Salze von Carbonsäuren eine oder mehrere Verbindungen ausgewählt aus der Gruppe bestehend aus Zinn(II)-Salz der 2-Ethylhexansäure (d.h. Zinn(II)-(2-ethylhexanoat) oder Zinnoktoat), Zinn(II)-Salz der 2-Butyloctansäure, Zinn(II)-Salz der 2-Hexyldecansäure, Zinn(II)-Salz der Neodecansäure, Zinn(II)-Salz der Isononansäure, das Zinn(II)-Salz der Ölsäure, Zinn(II)-Salz der Ricinolsäure und Zinn(II)laurat eingesetzt.

In einer bevorzugten Ausführungsform der Erfindung wird mindestens ein Zinn(II)-Salz der Formel (IX)

$$Sn(C_xH_{2x+1}COO)_2 \qquad (IX)$$

eingesetzt, wobei x eine ganze Zahl von 8 bis 24, bevorzugt 10 bis 20, besonders bevorzugt von 12 bis 18 bedeutet. Besonders bevorzugt ist in Formel (IX) die Alkylkette $C_xH_{2x+1}$ des Carboxylats eine verzweigte Kohlenstoffkette, d.h. $C_xH_{2x+1}$ ist eine *iso*-Alkylgruppe.

Höchst bevorzugt werden als Zinn(II)-Salze von Carbonsäuren eine oder mehrere Verbindungen ausgewählt aus der Gruppe bestehend aus Zinn(II)-Salz der 2-Butyloctansäure, d.h. Zinn(II)-(2-butyloctoat), Zinn(II)-Salz der Ricinolsäure, d.h. Zinn(II)-ricinoleat und Zinn(II)-Salz der 2-Hexyldecansäure, d.h. Zinn(II)-(2-hexyldecanoat) eingesetzt.

In einer anderen bevorzugten Ausführungsform der Erfindung wird als Komponente B1

B1.1 ≥ 0,05 bis ≤ 1,5 Gew.-Teilen, bezogen auf die Summe der Gew.-Teile der Komponenten A1 und A2, Harnstoff und/oder Derivate des Harnstoffs und

B1.2 ≥ 0,03 bis ≤ 1,5 Gew.-Teilen, bezogen auf die Summe der Gew.-Teile der Komponenten A1 und A2, anderer Katalysatoren als die der Komponente B1.2, wobei der Gehalt an aminischen Katalysatoren in der Komponente B1.2 maximal 50 Gew.-% bezogen auf Komponente B1 betragen darf,

eingesetzt.

Komponente B1.1 umfasst Harnstoff und Derivate des Harnstoffs. Als Derivate des Harnstoffs seien beispielsweise genannt: Aminoalkylharnstoffe, wie z.B. (3-Dimethylaminopropylamin)-harnstoff und 1,3-Bis[3-(dimethylamino)propyl]harnstoff. Es können auch Mischungen von Harnstoff und Harnstoffderivaten eingesetzt werden. Bevorzugt wird ausschließlich Harnstoff in Komponente B1.1 eingesetzt. Die Komponente B1.1 wird in Mengen von ≥ 0,05 bis ≤ 1,5 Gew.-Teilen, bevorzugt von ≥ 0,1 bis ≤ 0,5 Gew.-Teilen, besonders bevorzugt von ≥ 0,25 bis ≤ 0,35 Gew.-Teilen, bezogen auf die Summe der Gew.-Teile der Komponenten A1 bis A2, eingesetzt. Die Komponente B1.2 wird in Mengen von ≥ 0,03 bis ≤ 1,5 Gew.-Teilen, bevorzugt ≥ 0,03 bis ≤ 0,5 Gew.-Teilen, besonders bevorzugt von ≥ 0,1 bis ≤ 0,3 Gew.-Teilen, ganz besonders bevorzugt von ≥ 0,2 bis ≤ 0,3 Gew.-Teilen, bezogen auf die Summe der Gew.-Teile der Komponenten A1 bis A2, eingesetzt.

Vorzugsweise beträgt der Gehalt an aminischen Katalysatoren in der Komponente B1.2 maximal 50 Gew-% bezogen auf Komponente B1.1, besonders bevorzugt maximal 25 Gew.-% bezogen auf Komponente B1.1. Ganz besonders bevorzugt ist Komponente B1.2 frei von aminischen Katalysatoren.

Als Katalysatoren der Komponente B1.2 können z.B. die oben beschriebenen Zinn(II)-Salze von Carbonsäuren eingesetzt werden.

Als in geringen Mengen (s.o.) gegebenenfalls mitzuverwendende aminische Katalysatoren seien genannt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine und cycloaliphatische Amidine.

Zu den in B1.2 genannten "aminischen Katalysatoren" gehören nicht Harnstoff oder seine Derivate.

Gegenstand der Erfindung ist daher auch ein Verfahren zur Herstellung von Polyurethanweichschaumstoffen, dadurch gekennzeichnet, dass

Komponente A enthaltend Polyethercarbonatpolyol mit einer Hydroxylzahl gemäß DIN 53240

$$\text{von} \geq 20 \text{ mg KOH/g bis} \leq 120 \text{ mg KOH/g (Komponente A1),}$$

im nicht-alkalischen Medium mit

C Wasser und/oder physikalischen Treibmitteln und
D Di und/oder Polyisocyanaten,
umgesetzt wird, wobei die Herstellung bei einer Kennzahl von ≥ 90 bis ≤ 120 erfolgt, dadurch gekennzeichnet, dass die Herstellung in Gegenwart von Komponente K erfolgt.

Das nicht-alkalische Medium kann vorzugsweise dadurch erreicht werden, dass als Katalysatoren gemäß Komponente B1 Harnstoff und/oder Derivate des Harnstoffs eingesetzt werden, und keine aminischen Katalysatoren eingesetzt werden.

Daher ist ein bevorzugter Gegenstand der Erfindung ein Verfahren zur Herstellung von Polyurethanweichschaumstoffen, dadurch gekennzeichnet, dass

A1 ein oder mehrere Polyethercarbonatpolyole mit einer Hydroxylzahl gemäß DIN 53240 von ≥ 20 mg KOH/g bis ≤ 120 mg KOH/g,
B1in Gegenwart von Harnstoff und/oder Derivaten des Harnstoffs und in Abwesenheit aminischer Katalysatoren mit
C Wasser und/oder physikalischen Treibmitteln und
D Di und/oder Polyisocyanaten,

im nicht-alkalischen Medium umgesetzt werden, wobei die Herstellung bei einer Kennzahl von ≥ 90 bis ≤ 120 erfolgt,
dadurch gekennzeichnet, dass die Herstellung in Gegenwart von Komponente K erfolgt.

Als Komponente B2 werden Hilfs- und Zusatzstoffe eingesetzt, wie

a) oberflächenaktive Zusatzstoffe, wie Emulgatoren und Schaumstabilisatoren insbesondere solche mit niedriger Emission wie beispielsweise Produkte der Tegostab® LF2-Serie
b) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel (verschieden von Komponente K3; wie beispielsweise Ammoniumpolyphosphat), weitere Stabilisatoren gegen Alterungs- und Witterungseinflüsse, Antioxidantien, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffen sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Komponente C

Als Komponente C werden Wasser und/oder physikalische Treibmittel eingesetzt. Als physikalische Treibmittel werden beispielsweise Kohlendioxid und/oder leicht flüchtige organische Substanzen als Treibmittel eingesetzt. Vorzugsweise wird Wasser als Komponente C eingesetzt.

Komponente D

Geeignete Di- und/oder Polyisocyanate sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (X)

$$Q(NCO)n , \qquad (X)$$

in der
n = 2 - 4, vorzugsweise 2 -3,
und

Q einen aliphatischen Kohlenwasserstoffrest mit 2 - 18, vorzugsweise 6-10 C-Atomen, einen cycloaliphatischen Kohlenwasserstoffrest mit 4 - 15, vorzugsweise 6-13 C-Atomen oder einen araliphatischen Kohlenwasserstoffrest

mit 8 - 15, vorzugsweise 8-13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, zum Beispiel das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat eine oder mehrere Verbindungen ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt. Besonders bevorzugt wird 2,4- und/oder 2,6-Toluylendiisocyanat eingesetzt.

In einer weiteren Ausführungsform des erfindungsgemäßen Verfahrens umfasst die Isocyanat-Komponente B ein Toluylendiisocyanat-Isomerengemisch aus 55 bis 90 Gew.-% 2,4- und 10 bis 45 Gew.-% 2,6-TDI.

In einer weiteren Ausführungsform des erfindungsgemäßen Verfahrens umfasst die Isocyanat-Komponente D 100% 2,4- Toluylendiisocyanat.

In einer Ausführungsform des erfindungsgemäßen Verfahrens beträgt die Kennzahl ≥ 90 bis ≤ 120. Vorzugsweise liegt die Kennzahl in einem Bereich von ≥ 100 bis ≤ 115, besonders bevorzugt ≥ 102 bis ≤ 110. Die Kennzahl (Index) gibt das prozentuale Verhältnis der tatsächlich eingesetzten Isocyanat-Menge zur stöchiometrischen, d.h. für die Umsetzung der OH-Äquivalente berechneten Menge an Isocyanat-Gruppen (NCO)-Menge an.

$$\text{Kennzahl} = [\text{Isocyanat-Menge eingesetzt}) : (\text{Isocyanat-Menge berechnet}) \bullet 100 \qquad (XI)$$

<u>Komponente K</u>

Komponente K ist ausgewählt aus einer oder mehrerer Verbindungen der Gruppe bestehend aus den Komponenten K1, K2 und K3, die im Folgenden beschrieben werden.

<u>Komponente Kl</u>

Als Komponente K1 werden Ester ein- oder mehrbasiger Carbonäuren eingesetzt, wobei die pKs-Werte der (ersten) Dissoziation der Carbonsäuren 0,5 bis 4,0, bevorzugt von 1,0 bis 3,0 betragen. Die pKs-Werte der (ersten) Dissoziation der Carbonsäuren wurden in wässriger Lösung ermittelt. Als Säurekomponente kommen beispielsweise Alkylmonocarbonsäuren wie Ameisensäure, Arylmonocarbonsäuren wie α-Naphtoesäure, Alkylpolycarbonsäuren wie Oxalsäure, Malonsäure, Maleinsäure, Fumarsäure, Zitronensäure und Arylpolycarbonsäuren wie die Isomeren und die alkylsubstituierten Derivate der Phthalsäure, Trimellithsäure, Pyromellithsäure, die Isomere der Naphthalindicarbonsäure und cyclische Doppelester von α-Hydroxycarbonsäuren wie Mandelsäure oder Milchsäure in Frage. Bevorzugt werden gesättigte oder ungesättigte C2-C4-Alkylpolycarbonsäuren eingesetzt, besonders bevorzugt Oxalsäure. Als Alkoholkomponente kommen beispielsweise aliphatische Mono- und Polyole wie Methanol, Ethanol, Propanol, Isopropanol, Ethylenglykol, 1,2- und 1,3-Propandiol, die Isomere von Butandiol, 2-Buten-1,4-diol, 2-Butin-1,4-diol, Neopentylglykol, Glycerin, Trimethylolpropan, Pentaerythrit, als Arylalkohole Phenol und seine alkylsubstituierten Derivate, Naphthol und seine alkylsubstituierten Derivate, Hydrochinon, Resorcin und Trihydroxybenzol in Frage. Bevorzugt sind aliphatische Monoole, insbesondere Methanol, Ethanol, n- oder iso-Propanol, n-, iso-, oder tert.-Butanol. Besonders bevorzugt werden als Komponente K1 die Methyl- sowie Ethylester der Oxalsäure und/oder Malonsäure, höchst bevorzugt Oxalsäurediethylester eingesetzt.

<u>Komponente K2</u>

Komponente K2 umfasst Mono-, Di- und Polysulfonate von mono- und mehrfunktionellen Alkoholen.

Als Komponente K2 werden vorzugsweise Mono-, Di- und Polysulfonate mono- und mehrfunktioneller Alkohole eingesetzt, wobei die Sulfonatgruppen abgeleitet sind von den Isomeren der Toluolsulfonsäure, substituierten Benzol-, und Toluolsulfonsäuren, Alkylsulfonsäuren oder Naphtylsulfonsäuren. Bevorzugt leiten sich die Sulfonatgruppen ab von Methansulfonsäure oder den Toluolsulfonsäuren, insbesondere p-Toluolsulfonsäure. Als Alkoholkomponente der Mono-, Di- und Polysulfonate eignen sich mono-, di-, tri-, tetra- und höherfunktionelle Alkohole und/oder Polyole. So können beispielsweise aliphatische Mono- und Polyole wie Methanol, Ethanol, Propanol, Isopropanol, n-, iso-, oder tert.-Butanol, Ethandiol, 1,2-Propandiol, 1,3-Propandiol, die Isomere von Butandiol, 2-Buten-1,4-diol, 2-Butin-1,4-diol, Neopentylglykol, Glycerin, Trimethylolpropan, Pentaerythrit, Polyethylenglykole und Polypropylenglykole mit einer Molmasse von 100-2000 g/mol, bevorzugt 200 bis 600 g/mol, Arylalkohole wie Phenol und seine alkylsubstituierten Derivate, Naphthol und seine alkylsubstituierten Derivate, Hydrochinon, Resorcin, Bisphenole (z.B. Bisphenol A) oder Trihydroxybenzol eingesetzt werden. Bevorzugt werden aliphatische Monoole verwendet, insbesondere Methanol, Ethanol, n- oder iso-Propanol, n-, iso-, oder tert.-Butanol.

Als Komponente K2 geeignet sind auch Gemische von (C10-C21)Alkansulfonsäurephenylestern, die z.B. unter den Handelsnamen Mesamoll und Mesamoll II kommerziell verfügbar sind. Besonders bevorzugt wird als Komponente K2 para-Toluolsulfonsäuremethylester und/oder Gemische von (C10-C21)Alkansulfonsäurephenylestern eingesetzt, höchst bevorzugt wird para-Toluolsulfonsäuremethylester eingesetzt.

Komponente K3

Komponente K3 ist ausgewählt aus einer oder mehreren Verbindungen der Gruppe bestehend aus den Komponenten K3.1, K3.2 und K3.3, die im Folgenden beschrieben werden.

Als Komponente K3.1 werden Ester der Phosphorsäure, Phosphonsäure, Phosphorigen Säure, Phosphinsäure, Phosphonigsäure und Phosphinigsäure, wobei diese Ester jeweils keine P-OH Gruppe enthalten, eingesetzt. Bevorzugt ist Komponente K3.1 ausgewählt aus mindestens einem Ester der Gruppe bestehend aus Ester der Phosphonsäure mit mono- und/oder difunktionellen Alkoholen, Ester der Phosphorsäure mit mono- und/oder difunktionellen Alkoholen und alkoxylierte Phosphorsäure, wobei diese Ester jeweils keine P-OH Gruppe enthalten,

Besonders bevorzugt ist Komponente K3.1 ausgewählt aus mindestens einem Ester der Gruppe bestehend aus Ester der Phosphorsäure mit mono- und/oder difunktionellen aliphatischen Alkoholen und ethoxylierte Phosphorsäure, wobei diese Ester jeweils keine P-OH Gruppe enthalten.

Als Phosphorsäureester sind beispielsweise geeignet Triester von Phosphorsäure, Tetraester von Pyrophosphorsäure (Diphosphorsäure) und Tetra- oder Polyester von Polyphosphorsäure und Alkoholen mit 1 bis 30 C-Atomen, wobei diese Ester jeweils keine P-OH Gruppe enthalten. Als Komponente K3.1 sind beispielsweise die folgenden Verbindungen geeignet: Phosphorsäuretrimethylester, Phosphorsäuretriethylester, Phosphorsäuretripropylester, Phosphorsäuretributylester, Phosphorsäuretrioctylester, Phosphorsäuretris(2-ethylhexyl)ester, Phosphorsäuretris-(2-butoxyethyl)ester, Tris(2-chlorisopropyl)phosphat (TCPP), Phosphorsäure-cyclopropylmethyl-diethylester, Phosphorsäurediethyl-3-butenylester, Phosphorsäuretriphenylester und Phosphorsäuretrikresylester.

Bevorzugt eingesetzt wird auch alkoxylierte Phosphorsäure. Alkoxylierte Phosphorsäure sind Umsatzprodukte von Phosphorsäure mit Alkylenoxiden, bevorzugt mit Ethylenoxid und/oder Propylenoxid, besonders bevorzugt mit Ethylenoxid. Alkoxylierte Phosphorsäure wird bevorzugt durch direkte Umsetzung von Phosphorsäure mit Alkylenoxiden ohne Zugabe eines Katalysators erhalten, wobei die Phosphorsäure in reiner Form oder als wässrige Lösung (beispielsweise in Form einer 85 Gew.-% igen Lösung) eingesetzt werden kann.

Als Komponente K3.2 werden oligomere Alkylphosphate der allgemeinen Formel (II) eingesetzt,

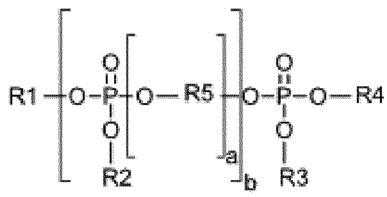

(II)

wobei

a eine ganze Zahl von 1 bis 10 ist,
b eine ganze Zahl von 1 bis 10 ist,
R1, R2, R3, R4 Alkylgruppen mit mindestens einem C-Atom sind, bevorzugt C1 bis C6-Alkyl sind, wobei R1, R2, R3, R4 gleich oder unabhängig voneinander verschieden sind, und R5 eine lineare Alkylengruppe mit mindestens zwei C-Atomen oder eine verzweigte Alkylengruppe mit mindestens drei C-Atomen ist, bevorzugt eine lineare Alkylengruppe mit zwei bis zehn C-Atomen oder eine verzweigte Alkylengruppe mit drei bis zehn C-Atomen ist.

Ein bevorzugt eingesetztes oligomeres Alkylphosphat gemäß der obigen allgemeinen Formel (II) ist z.B. das als kommerzielles Handelsprodukt verfügbare Flammschutzmittel Fyrol™ PNX (ICL Industrial Products).

Als Komponente K3.3 werden oligomere Alkylphosphate der allgemeinen Formel (III) eingesetzt,

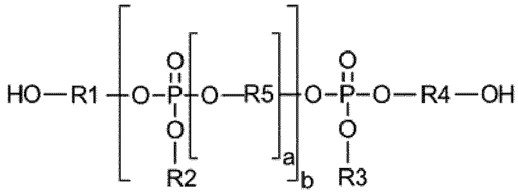

(III),

wobei

a eine ganze Zahl von 1 bis 10 ist,
b eine ganze Zahl von 1 bis 10 ist,
R1, R4, R5 lineare Alkylengruppen mit mindestens zwei C-Atomen oder verzweigte Alkylengruppen mit mindestens drei C-Atomen, bevorzugt lineare Alkylengruppen mit zwei bis zehn C-Atomen oder verzweigte Alkylengruppen mit drei bis zehn C-Atomen sind, wobei R1, R4, R5 gleich oder unabhängig voneinander verschieden sind, und
R2, R3 Alkylgruppen mit mindestens einem C-Atom sind, bevorzugt C1 bis C6-Alkyl sind, wobei R2 und R3 gleich oder unabhängig voneinander verschieden sind.

Ein bevorzugt eingesetztes oligomeres Alkylphosphat gemäß der obigen allgemeinen Formel (III) ist z.B. das als kommerzielles Handelsprodukt verfügbare Flammschutzmittel Exolit® OP 550 (Clariant).
Komponente K wird in einer Menge von ≥ 1,0 bis ≤ 5,0 Gew.-Teile, besonders bevorzugt von ≥ 2,0 bis ≤ 5,0 Gew.-Teile eingesetzt werden, wobei sich die Gewichtsteilangaben der Komponente K auf die Summe der Gewichtsteile der Komponenten A1 + A2 = 100 Gewichtsteile beziehen. Es wurde festgestellt, dass eine zu hohe Menge an Komponente K in unerwünschtem Maße die mechanischen Eigenschaften des Weichschaumstoffs gegenüber dem Nullwert (ohne Komponente K) beeinflusst. Auch aus wirtschaftlichen Überlegungen heraus sind höhere Gehalte an Komponente K eher ungünstig.
Zur Herstellung der Polyurethanschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben.
Die Polyurethanweichschaumstoffe können als Form- oder auch als Blockschaumstoffe, vorzugsweise als Blockschaumstoffe hergestellt werden. Gegenstand der Erfindung sind daher ein Verfahren zur Herstellung der Polyurethanweichschaumstoffe, die nach diesen Verfahren hergestellten Polyurethanweichschaumstoffe, die nach diesen Verfahren hergestellten Polyurethanweichblockschaumstoffe bzw. Polyurethanweichformschaumstoffe, die Verwendung der Polyurethanweichschaumstoffe zur Herstellung von Formteilen sowie die Formteile selbst.
Die nach der Erfindung erhältlichen Polyurethanweichschaumstoffe, finden beispielsweise folgende Anwendung: Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.
Die erfindungsgemäßen Weichschäume weisen eine Rohdichte gemäß DIN EN ISO 3386-1-98 im Bereich von ≥ 16 bis ≤ 60 kg/$m^3$, bevorzugt ≥ 20 bis ≤ 50 kg/$m^3$ auf.

**Beispiele**

Messmethoden:

Experimentell bestimmte OH-Zahlen (Hydroxylzahl) wurden gemäß der Vorschrift der DIN 53240 ermittelt.
Experimentell bestimmte Säurezahlen wurden gemäß der Vorschrift der DIN 53402 ermittelt.

Emissionsbestimmung: cyclisches Propylencarbonat und Nebenkomponenten:
Headspace-GC und -GC/MS für cyclisches Propylencarbonat in Weichschaumproben:
Eine auf ca. ± 0.3 mg gewogene Weichschaum-Probe von ca. 100 mg wird in ein 22 ml Headspace-Glasvial gegeben, mit Silicon-Septum sorgfältig verschlossen, und im vorgeheizten Ofen des Headspace-Autosamplers (PerkinElmer Turbomatrix, Seriennr. M41L0505273) 15 min bei 140°C getempert. Anschließend wird der Dampfraum bei einem Druck von 2,35 bar im Helium-Strom in den Injektor-Block des Gaschromatographen (Thermo Scientific, Trace-GC-Ultra, Seriennr. 6201252621) injiziert. Das Injektionsvolumen wird auf zwei gleiche, unpolare Säulen des Typs Rxi-5Sil MS (Restek, 20 m Länge, 0.15 mm Innendurchmesser, 2.0 μm Schichtdicke) verteilt. Die Ofentemperatur liegt für 2 min bei

45°C und wird mit 12°C / min auf 150°C und 45°C / min auf 310°C gebracht. Die eine Säule führt zum Flammionisationsdetektor (FID). Die andere endet in einem direkt gekoppelten Quadrupol-Massenspektrometer mit 70 eV Elektronenstoß-Ionisation (Thermo Scientific, ISQ-MS, Seriennr. ISQ121046). Das cyclische Propylencarbonat (CAS-Nr. 108-32-7) wird mittels FID-Response quantitativ erfasst und seine Identität durch GC/MS bestätigt.

Beispiel 1

Herstellung der ethoxylierten Phosphorsäure Komponente K3.1-1:
290 g Phosphorsäure (85%-ige wässrige Lösung) wurden in einem 2 Liter Druckreaktor vorgelegt und unter Rühren auf 55°C aufgeheizt. Nach fünfmaligem Stickstoff-Vakuum-Austausch zwischen 0,1 und 3,0 bar (absolut) wurde der Druck im Reaktor mittels Stickstoff auf 2,1 bar (absolut) eingestellt. Anschließend wurden 1816 g Ethylenoxid bei 55°C innerhalb von 6,5 Stunden in den Reaktor dosiert. Nach einer Nachreaktionszeit von 3 Stunden bei 55°C wurden leicht flüchtige Anteile bei 90°C unter Vakuum (10 mbar (absolut)) für 30 Minuten abdestilliert und das Reaktionsgemisch dann auf Raumtemperatur abgekühlt. Es wurde ethoxylierte Phosphorsäure in Polyethylenglykol erhalten mit folgenden Eigenschaften:

| | |
|---|---|
| OH-Zahl: | 353 mg KOH/g |
| Säurezahl: | 0,0 mg KOH/g |

Die vorliegende Erfindung wird anhand der nachfolgenden Beispiele erläutert, ohne jedoch darauf beschränkt zu sein. Es bedeuten:

A1-1: trifunktionelles Polyethercarbonatpolyol, OH-Zahl 56 mg KOH/g, hergestellt durch Copolymerisation von 80 Gew.-% Propylenoxid und 20 Gew.-% Kohlendioxid mit Glycerin als H-funktioneller Starterverbindung in Gegenwart eines Doppelmetallcyanid-Katalysators.

A2-1: trifunktionelles Polyetherpolyol auf Basis Glycerin mit Hydroxylzahl 48 mg KOH/g, erhalten durch Copolymerisation von 12 Gew.-% Ethylenoxid mit 88 Gew.-% Propylenoxid.

B1-1: Niax Catalyst A-1: Handelsprodukt der Firma Momentive Performance Materials GmbH, Leverkusen, Bis[2-(N,N'-dimethylamino)ethyl] -basiert

B1-2: DABCO T-9, Handelsprodukt der Firma Air Products GmbH, Hamburg, Zinn-(2-ethylhexanoat)

B1-3: Kosmos EF, Zinn-(II)-ricinoleatzubereitung, Fa. Evonik Nutrition & Care GmbH, Essen

B2-1: Tegostab BF 2370, Handelsprodukt,Fa. Evonik Nutrition & Care GmbH, Essen

C-1: Wasser

D-1: Desmodur T 80, Mischung von 2,4'-Toluylendiisocyanat und 2,6'-Toluylendiisocyanat im Verhältnis 80/20, Covestro AG, Leverkusen

D-2: Desmodur T 65, Mischung von 2,4'-Toluylendiisocyanat und 2,6'-Toluylendiisocyanat im Verhältnis 65/35, Covestro AG, Leverkusen

K1-1: Oxalsäurediethylester, Fa. Sigma-Aldrich Chemie GmbH, München

K2-1 : para-Toluolsulfonsäuremethylester, Fa. Sigma-Aldrich Chemie GmbH, München

K3.1-1: ethoxylierte Phosphorsäure, hergestellt gemäß Beispiel 1

K3.2-1: Fyrol PNX-LE, oligomeres Alkylphosphat, Fa. ICL-IP Bitterfeld GmbH, Bitterfeld

Die in den Tabellen 1 und 2 beschriebenen Polyurethan-Weichschaumstoffe wurden mit einer industrieüblichen diskontinuierlichen Verschäumanlage ohne schwimmenden Deckel mit dem Grundriss 1 m x 1 m hergestellt. Die Höhe der Schaumstoffblöcke betrug ca. 80 cm.

Die Vermischung der Komponenten erfolgte mittels eines Rührwerks in einem Metallzylinder, der nach Zugabe des Isocyanats mechanisch aus der Schaumform entfernt wurde.

Die Stauchhärte und die Rohdichte der Schaumstoffe wurde gemäß DIN EN ISO 3386-1 bestimmt.

Die Emissionsbestimmung zur Bestimmung des cyclischen Propylencarbonats wurde wie oben angegeben durchgeführt.

Ergebnisse:

Ohne Komponente K zeigte der resultierende Weichschaumstoff eine relativ hohe Emission an cyclischem Propylencarbonat (Vergleichbeispiel 2), bei Einsatz einer Komponente K wurden niedrigere Werte für cyclisches Propylencarbonat in der Emissionsbestimmung festgestellt.
Insbesondere ab einer Menge von 1,0 Gew.-Tle Komponente K, und noch ausgeprägter bei den Versuchen mit 2,0 bzw. 5,0 Gew.Tle. Komponente K wurde eine weitere Erniedrigung der Werte für cyclisches Propylencarbonat in der Emissionsbestimmung festgestellt.

Tabelle 1

| KOMPONENTE \ Beispiel | | **2 (Vgl.)** | **3** | **4** | **5** | **6** | **7** |
|---|---|---|---|---|---|---|---|
| A1-1 | [Gew.- Tle.] | 70 | 70 | 70 | 70 | 70 | 70 |
| A2-1 | [Gew.- Tle.] | 30 | 30 | 30 | 30 | 30 | 30 |
| C-1 | [Gew.- Tle.] | 4,50 | 4,50 | 4,50 | 4,50 | 4,50 | 4,50 |
| B2-1 | [Gew.- Tle.] | 1,0 | 1,0 | 1,0 | 1,0 | 1,0 | 1,0 |
| B1-1 | [Gew.-Tle.] | 0,12 | 0,12 | 0,12 | 0,12 | 0,12 | 0,12 |
| B1-2 | [Gew.-Tle.] | 0,18 | 0,18 | 0,18 | 0,18 | 0,18 | - |
| B1-3 | [Gew.- Tle.] | - | - | - | - | - | 0,60 |
| K1-1 | [Gew.- Tle.] | - | - | 2,0 | - | - | - |
| K2-1 | [Gew.- Tle.] | - | - | - | 2,0 | - | - |
| K3.1-1 | [Gew.- Tle.] | - | - | - | - | 2,0 | 2,0 |
| K3.2-1 | [Gew.- Tle.] | - | 2,0 | - | - | - | - |
| D-1 | [Gew.- Tle.] | 56,0 | 56,0 | 56,0 | 56,0 | 57,2 | 57,2 |
| | | | | | | | |
| Kennzahl | | 108 | 108 | 108 | 108 | 108 | 108 |
| Rohdichte | kg $m^{-3}$ | 21,6 | 21,6 | 21,2 | 22,3 | 21,4 | 21,5 |
| Stauchhärte 40 % Kompression | kPa | 4,46 | 3,93 | 2,81 | 3,40 | 5,31 | 4,22 |
| cycl. Propylencarbonat | [mg $m^{-3}$] | 130 | 16 | 17 | 6 | 50 | 28 |
| | | | | | | | |

Tabelle 2

| KOMPONENTE \ Beispiel | | 8 | 9 | 10 | 11 | 12 | 13 |
|---|---|---|---|---|---|---|---|
| A1-1 | [Gew.- Tle.] | 70 | 70 | 70 | 70 | 70 | 70 |
| A2-1 | [Gew.- Tle.] | 30 | 30 | 30 | 30 | 30 | 30 |
| C-1 | [Gew.- Tle.] | 4,50 | 4,50 | 4,50 | 4,50 | 4,50 | 4,50 |
| B2-1 | [Gew.- Tle.] | 1,0 | 1,0 | 1,0 | 1,0 | 1,0 | 1,0 |
| B1-1 | [Gew.- Tle.] | 0,12 | 0,12 | 0,12 | 0,12 | 0,12 | 0,12 |
| B1-2 | [Gew.- Tle.] | 0,18 | 0,18 | 0,18 | 0,18 | 0,18 | - |

(fortgesetzt)

| KOMPONENTE \ Beispiel | | 8 | 9 | 10 | 11 | 12 | 13 |
|---|---|---|---|---|---|---|---|
| B1-3 | [Gew.- Tle.] | - | - | - | - | - | 0,60 |
| K2-1 | [Gew.-Tle.] | - | - | - | - | - | - |
| K3.1-1 | [Gew.- Tle.] | - | - | - | - | 5,0 | - |
| K3.2-1 | [Gew.- Tle.] | 0,2 | 0,5 | 1,0 | 5,0 | - | 2,0 |
| K1-1 | [Gew.- Tle.] | - | - | - | - | - | - |
| D-1 | [Gew.- Tle.] | 56,0 | 56,0 | 56,0 | 56,0 | 29,4 | 56,0 |
| D-2 | | | | | | 29,4 | - |
| Kennzahl | | 108 | 108 | 108 | 108 | 108 | 108 |
| Rohdichte | kg $m^{-3}$ | 21,3 | 21,1 | 21,1 | 21,6 | 22,5 | 22,1 |
| Stauchhärte 40 % Kompression | kPa | 3,89 | 3,82 | 3,40 | 3,86 | 3,80 | 3,31 |
| cycl. Propylencarbonat | [mg $m^{-3}$] | 120 | 110 | 16 | 7 | 4 | 10 |
| | | | | | | | |

**Patentansprüche**

**1.** Verfahren zur Herstellung von Polyurethanweichschaumstoffen mit einer Rohdichte gemäß DIN EN ISO 3386-1-98 im Bereich ≥ 16 bis ≤ 60 kg/$m^3$ durch Umsetzung von Komponente A,

wobei Komponente A die folgende Zusammensetzung aufweist:

A1 ≥ 40 bis ≤ 100 Gew.-Teile eines oder mehrerer Polyethercarbonatpolyole mit einer Hydroxylzahl gemäß DIN 53240 von ≥ 20 mg KOH/g bis ≤ 120 mg KOH/g,
A2 ≤ 60 bis ≥ 0 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind,
A3 ≤ 20 bis ≥ 0 Gew.-Teile, bezogen auf die Summe der Gew.-Teile der Komponenten A1 und A2, eines oder mehrerer Polyetherpolyole mit einer Hydroxylzahl gemäß DIN 53240 ≥ 20 mg KOH/g bis ≤ 250 mg KOH/g, und einem Gehalt an Ethylenoxid von > 60 Gew.-%, wobei die Polyetherpolyole A3 frei von Carbonateinheiten sind,
A4 ≤ 40 bis ≥ 0 Gew.-Teile, bezogen auf die Summe der Gew.-Teile der Komponenten A1 und A2, eines oder mehrerer Polymerpolyole, PHD-Polyole und/oder PIPA-Polyole,
A5 ≤ 40 bis ≥ 0 Gew.-Teile, bezogen auf die Summe der Gew.-Teile der Komponenten A1 und A2, Polyole, die nicht unter die Definition der Komponenten A1 bis A4 fallen,
B gegebenenfalls B1) Katalysatoren, und/oder B2) Hilfs- und Zusatzstoffen
C Wasser und/oder physikalischen Treibmitteln,

mit

D Di und/oder Polyisocyanaten,

wobei die Herstellung bei einer Kennzahl von ≥ 90 bis ≤ 120 erfolgt und wobei alle Gewichtsteilangaben der Komponenten A1, A2, A3, A4, A5 so normiert sind, dass die Summe der Gewichtsteile A1 + A2 in der Zusammensetzung 100 ergibt,
**dadurch gekennzeichnet, dass** die Herstellung in Gegenwart einer Komponente K erfolgt, wobei Komponente K ausgewählt ist aus einer oder mehreren Verbindungen der Gruppe bestehend aus

K1 Ester von ein- oder mehrbasigen Carbonsäuren, deren (erste) Dissoziation einen pKs-Wert von 0,5 bis 4,0 aufweist,

K2 Mono-, Di- und Polysulfonate von mono- und mehrfunktionellen Alkoholen, und
K3 eine oder mehrere Verbindungen ausgewählt aus der Gruppe bestehend aus
K 3.1 Ester der Phosphorsäure, Phosphonsäure, Phosphorigen Säure, Phosphinsäure, Phosphonigsäure und Phosphinigsäure, wobei diese Ester jeweils keine P-OH Gruppe enthalten,
K3.2 oligomere Alkylphosphate der allgemeinen Formel (II),

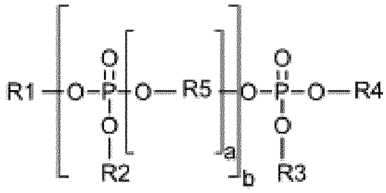

(II)

wobei
a eine ganze Zahl von 1 bis 10 ist,
b eine ganze Zahl von 1 bis 10 ist,
R1, R2, R3, R4 Alkylgruppen mit mindestens einem C-Atom sind, wobei R1, R2, R3, R4 gleich oder unabhängig voneinander verschieden sind, und
R5 eine lineare Alkylengruppe mit mindestens zwei C-Atomen oder eine verzweigte Alkylengruppe mit mindestens drei C-Atomen ist,
und

K3.3 oligomere Alkylphosphate der allgemeinen Formel (III),

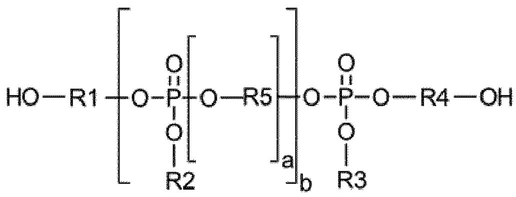

(III),

wobei
a eine ganze Zahl von 1 bis 10 ist,
b eine ganze Zahl von 1 bis 10 ist,
R1, R4, R5 lineare Alkylengruppen mit mindestens zwei C-Atomen oder verzweigte Alkylengruppen mit mindestens drei C-Atomen, wobei R1, R4, R5 gleich oder unabhängig voneinander verschieden sind, und
R2, R3 Alkylgruppen mit mindestens einem C-Atom sind, wobei R2 und R3 gleich oder unabhängig voneinander verschieden sind,
und wobei Komponente K in einer Menge von ≥ 1,0 bis ≤ 5,0 Gew.-Teile eingesetzt wird, wobei sich alle Gewichtsteilangaben der Komponente K auf die Summe der Gewichtsteile der Komponenten A1 + A2 = 100 Gewichtsteile beziehen.

**2.** Verfahren gemäß Anspruch 1, wobei Komponente K in einer Menge von ≥ 2,0 bis ≤ 5,0 Gew.-Teile eingesetzt wird, wobei sich alle Gewichtsteilangaben der Komponente K auf die Summe der Gewichtsteile der Komponenten A1 + A2 = 100 Gewichtsteile beziehen.

**3.** Verfahren gemäß einem der Ansprüche 1 oder 2, wobei als Komponente B

B1 Katalysatoren wie a) aliphatische tertiäre Amine, cycloaliphatische tertiäre Amine, aliphatische Aminoether, cycloaliphatische Aminoether, aliphatische Amidine, cycloaliphatische Amidine, Harnstoff und Derivate des Harnstoffs und/oder b) Zinn(II)-Salze von Carbonsäuren, und
B2 gegebenenfalls Hilfs- und Zusatzstoffe

eingesetzt werden.

4. Verfahren gemäß einem der Ansprüche 1 oder 2, wobei als Komponente B

B1 Katalysatoren und
B2 gegebenenfalls Hilfs- und Zusatzstoffe
eingesetzt werden,
wobei als Komponente B1
B1.1 ≥ 0,05 bis ≤ 1,5 Gew.-Teilen, bezogen auf die Summe der Gew.-Teile der Komponenten A1 und A2, Harnstoff und/oder Derivate des Harnstoffs und
B1.2 ≥ 0,03 bis ≤ 1,5 Gew.-Teilen, bezogen auf die Summe der Gew.-Teile der Komponenten A1 und A2, anderer Katalysatoren als die der Komponente B1.2, wobei der Gehalt an aminischen Katalysatoren in der Komponente B1.2 maximal 50 Gew.-% bezogen auf Komponente B1 betragen darf,
eingesetzt wird.

5. Verfahren gemäß einem der Ansprüche 1 bis 4, wobei Komponente A frei ist von Komponenten A3 und/oder A4.

6. Verfahren gemäß einem der Ansprüche 1 bis 5, wobei Komponente A umfasst:

A1 ≥ 65 bis ≤ 75 Gew.-Teile eines oder mehrerer Polyethercarbonatpolyole mit einer Hydroxylzahl gemäß DIN 53240 von ≥ 20 mg KOH/g bis ≤ 120 mg KOH/g, und
A2 ≤ 35 bis ≥ 25 Gew.-Teile eines oder mehrerer Polyetherpolyole mit einer Hydroxylzahl gemäß DIN 53240 von ≥ 20 mg KOH/g bis ≤ 250 mg KOH/g und einem Gehalt an Ethylenoxid von ≥ 0 bis ≤ 60 Gew.-%, wobei die Polyetherpolyole A2 frei von Carbonateinheiten sind.

7. Verfahren gemäß einem der Ansprüche 1 bis 6, wobei Komponente A1 ein Polyethercarbonatpolyol umfasst, welches erhältlich ist durch Copolymerisation von Kohlendioxid, einem oder mehreren Alkylenoxiden, in Gegenwart eines oder mehrerer H-funktioneller Startermoleküle, wobei das Polyethercarbonatpolyol vorzugsweise einen $CO_2$-Gehalt von 15 bis 25 Gew.-% aufweist.

8. Verfahren gemäß einem der Ansprüche 1 bis 7, wobei Komponente K ausgewählt ist aus einer oder mehrerer Verbindungen der Gruppe bestehend aus

K1 Methylester der Oxalsäure, Ethylester der Oxalsäure, Methylester der Malonsäure und/oder Ethylester der Malonsäure,
K2 para-Toluolsulfonsäuremethylester und/oder Gemische von (C10-C21)Alkansulfonsäurephenylestern,
K3.1 Triester von Phosphorsäure, Tetraester von Pyrophosphorsäure, Tetra- oder Polyester von Polyphosphorsäure und Alkoholen mit 1 bis 30 C-Atomen, wobei diese Ester jeweils keine P-OH Gruppe enthalten, oder alkoxylierte Phosphorsäure,
K3.2 oligomere Alkylphosphate der allgemeinen Formel (II), wobei a eine ganze Zahl von 1 bis 10 ist, b eine ganze Zahl von 1 bis 10 ist, R1, R2, R3, R4 C1 bis C6-Alkyl sind, wobei R1, R2, R3, R4 gleich oder unabhängig voneinander verschieden sind, und R5 eine lineare Alkylengruppe mit zwei bis zehn C-Atomen oder eine verzweigte Alkylengruppe mit drei bis zehn C-Atomen ist,
K3.3 oligomere Alkylphosphate der allgemeinen Formel (III), wobei a eine ganze Zahl von 1 bis 10 ist, b eine ganze Zahl von 1 bis 10 ist, R1, R4, R5 lineare Alkylengruppen mit zwei bis zehn C-Atomen oder verzweigte Alkylengruppen mit drei bis zehn C-Atomen sind, wobei R1, R4, R5 gleich oder unabhängig voneinander verschieden sind, und R2, R3 C1 bis C6-Alkyl sind, wobei R2 und R3 gleich oder unabhängig voneinander verschieden sind.

9. Verfahren gemäß einem der Ansprüche 1 bis 7, wobei

K3.1 ausgewählt ist aus einer oder mehreren Verbindungen der Gruppe bestehend aus Phosphorsäuretrimethylester, Phosphorsäuretriethylester, Phosphorsäuretripropylester, Phosphorsäuretributylester, Phosphorsäuretrioctylester, Phosphorsäuretris(2-ethylhexyl)ester, Phosphorsäuretris-(2-butoxyethyl)ester, Tris(2-chlorisopropyl)phosphat (TCPP), Phosphorsäure-cyclopropylmethyl-diethylester, Phosphorsäure-diethyl-3-butenylester, Phosphorsäuretriphenylester, Phosphorsäuretrikresylester und einem Umsatzprodukt von Phosphorsäure mit Ethylenoxid und/oder Propylenoxid.

10. Verfahren gemäß einem der Ansprüche 1 bis 9, wobei eine Komponente B eingesetzt wird, die mindestens ein Zinn(II)-Salz der Formel (IX) S

$$n(C_xH_{2x+1}COO)_2 \qquad (IX)$$

enthält, wobei x eine ganze Zahl von 8 bis 24, bevorzugt 10 bis 20, besonders bevorzugt von 12 bis 18 bedeutet.

**11.** Verfahren gemäß einem der Ansprüche 1 bis 10, wobei in Komponente C 2,4- und/oder 2,6-TDI als Isocyanatkomponente eingesetzt wird

**12.** Polyurethan-Weichschaumstoffe mit einer Rohdichte gemäß DIN EN ISO 3386-1-98 im Bereich ≥ 16 bis ≤ 60 kg/m³, erhältlich durch ein Verfahren gemäß einem der Ansprüche 1 bis 11.

**13.** Verwendung der Polyurethanschaumstoffe gemäß Anspruch 12 zur Herstellung von Möbelpolsterungen, Textileinlagen, Matratzen, Automobilsitze, Kopfstützen, Armlehnen, Schwämme, Schaumstofffolien zur Verwendung in Automobilteilen wie beispielsweise Dachhimmeln, Türseitenverkleidungen, Sitzauflagen und Bauelementen.

## Claims

**1.** Process for producing flexible polyurethane foams having a bulk density in accordance with DIN EN ISO 3386-1-98 in the range from ≥ 16 to ≤ 60 kg/m³ by reaction of

component A,
wherein component A has the following composition:

A1 from ≥ 40 to ≤ 100 parts by weight of one or more polyether carbonate polyols having a hydroxyl number in accordance with DIN 53240 of from ≥ 20 mg KOH/g to ≤ 120 mg KOH/g,
A2 from ≤ 60 to ≥ 0 parts by weight of one or more polyether polyols having a hydroxyl number in accordance with DIN 53240 of from ≥ 20 mg KOH/g to ≤ 250 mg KOH/g and a content of ethylene oxide of from ≥ 0 to ≤ 60% by weight, with the polyether polyols A2 being free of carbonate units,
A3 from ≤ 20 to ≥ 0 parts by weight, based on the sum of the parts by weight of the components A1 and A2, of one or more polyether polyols having a hydroxyl number in accordance with DIN 53240 of from ≥ 20 mg KOH/g to ≤ 250 mg KOH/g and a content of ethylene oxide of > 60% by weight, with the polyether polyols A3 being free of carbonate units,
A4 from ≤ 40 to ≥ 0 parts by weight, based on the sum of the parts by weight of the components A1 and A2, of one or more polymer polyols, PUD polyols and/or PIPA polyols,
A5 from ≤ 40 to ≥ 0 parts by weight, based on the sum of the parts by weight of the components A1 and A2, of polyols which do not come under the definition of the components A1 to A4,
B optionally
B1) catalysts and/or
B2) auxiliaries and additives

C water and/or physical blowing agents,
with
D diisocyanates and/or polyisocyanates,
where the production reaction is carried out at an index of from ≥ 90 to ≤ 120 and where all parts by weight figures for the components A1, A2, A3, A4, A5 are normalized so that the sum of the parts by weight of A1 + A2 in the composition is 100,
**characterized in that** the production reaction is carried out in the presence of a component K, where component K is selected from among one or more compounds from the group consisting of

K1 esters of monobasic or polybasic carboxylic acids whose (first) dissociation has a pKa of from 0.5 to 4.0,
K2 monosulfonates, disulfonates and polysulfonates of monofunctional and polyfunctional alcohols and
K3 one or more compounds selected from the group consisting of
K3.1 esters of phosphoric acid, phosphonic acid, phosphorous acid, phosphinic acid, phosphonous acid and phosphinous acid, where these esters in each case do not contain a P-OH group,
K3.2 oligomeric alkyl phosphates of the general formula (II),

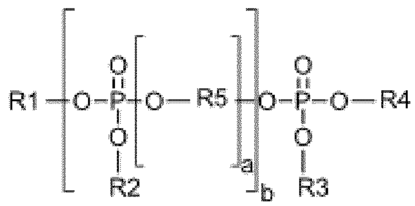

(II)

where
a is an integer from 1 to 10,
b is an integer from 1 to 10, R1, R2, R3, R4 are alkyl groups having at least one carbon atom, where R1, R2, R3, R4 are identical or independently different from one another, and
R5 is a linear alkylene group having at least two carbon atoms or a branched alkylene group having at least three carbon atoms,
and

K3.3 oligomeric alkyl phosphates of the general formula (III),

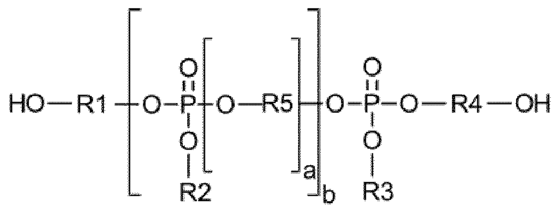

(III),

where

a is an integer from 1 to 10,
b is an integer from 1 to 10, R1, R4, R5 are linear alkylene groups having at least two carbon atoms or branched alkylene groups having at least three carbon atoms, where R1, R4, R5 are identical or independently different from one another, and R2, R3 are alkyl groups having at least one carbon atom, where R2 and R3 are identical or independently different from one another, and where component K is used in an amount of from ≥ 1.0 to ≤ 5.0 parts by weight, where all parts by weight figures for the component K are based on the sum of the parts by weight of the components A1 + A2 = 100 parts by weight.

**2.** Process according to Claim 1, wherein component K is used in an amount of from ≥ 2.0 to ≤ 5.0 parts by weight, where all parts by weight figures for the component K are based on the sum of the parts by weight of the components A1 + A2 = 100 parts by weight.

**3.** Process according to either of Claims 1 or 2, wherein B1 catalysts such as

a) aliphatic tertiary amines, cycloaliphatic tertiary amines, aliphatic amino ethers, cycloaliphatic amino ethers, aliphatic amidines, cycloaliphatic amidines, urea and derivatives of urea and/or
b) tin(II) salts of carboxylic acids and
B2 optionally auxiliaries and additives are used as component B.

**4.** Process according to either of Claims 1 or 2, wherein

B1 catalysts and
B2 optionally auxiliaries and additives are used as component B, where

B1.1 from ≥ 0.05 to ≤ 1.5 parts by weight, based on the sum of the parts by weight of the components A1 and A2, of urea and/or derivatives of urea and
B1.2 from ≥ 0.03 to ≤ 1.5 parts by weight, based on the sum of the parts by weight of the components A1

and A2, of catalysts other than those of the components B1.2, with the content of amine catalysts in the component B1.2 being not more than 50% by weight based on components B1,

are used as component B1.

**5.** Process according to any of Claims 1 to 4, wherein component A is free of components A3 and/or A4.

**6.** Process according to any of Claims 1 to 5, wherein component A comprises:

A1 from ≥ 65 to ≤ 75 parts by weight of one or more polyether carbonate polyols having a hydroxyl number in accordance with DIN 53240 of from ≥ 20 mg KOH/g to ≤ 120 mg KOH/g, and
A2 from ≤ 35 to ≥ 25 parts by weight of one or more polyether polyols having a hydroxyl number in accordance with DIN 53240 of from ≥ 20 mg KOH/g to ≤ 250 mg KOH/g and a content of ethylene oxide of from ≥ 0 to ≤ 60% by weight, with the polyether polyols A2 being free of carbonate units.

**7.** Process according to any of Claims 1 to 6, wherein component A1 comprises a polyether carbonate polyol which is obtainable by copolymerization of carbon dioxide and one or more alkylene oxides in the presence of one or more H-functional starter molecules, with the polyether carbonate polyol preferably having a $CO_2$ content of from 15 to 25% by weight.

**8.** Process according to any of Claims 1 to 7, wherein component K is selected from among one or more compounds of the group consisting of

K1 methyl esters of oxalic acid, ethyl esters of oxalic acid, methyl esters of malonic acid and/or ethyl esters of malonic acid,
K2 methyl para-toluene sulfonate and/or mixtures of (C10-C21) phenyl alkanesulfonates,
K3.1 triesters of phosphoric acid, tetraesters of pyrophosphoric acid, tetraesters or polyesters of polyphosphoric acid and alcohols having from 1 to 30 carbon atoms, with these esters in each case not containing any P-OH group, or alkoxylated phosphoric acid,
K3.2 oligomeric alkyl phosphates of the general formula (II), where a is an integer from 1 to 10, b is an integer from 1 to 10, R1, R2, R3, R4 are each C1-C6-alkyl, where R1, R2, R3, R4 are identical or independently different from one another, and R5 is a linear alkylene group having from two to ten carbon atoms or a branched alkylene group having from three to ten carbon atoms,
K3.3 oligomeric alkyl phosphates of the general formula (III), where a is an integer from 1 to 10, b is an integer from 1 to 10, R1, R4, R5 are linear alkylene groups having from two to ten carbon atoms or branched alkylene groups having from three to ten carbon atoms, where R1, R4, R5 are identical or independently different from one another, and R2, R3 are each C1-C6-alkyl, where R2 and R3 are identical or independently different from one another.

**9.** Process according to any of Claims 1 to 7, wherein

K3.1 is selected from among one or more compounds of the group consisting of trimethyl phosphate, triethyl phosphate, tripropyl phosphate, tributyl phosphate, trioctyl phosphate, tris(2-ethylhexyl) phosphate, tris(2-butoxyethyl) phosphate, tris(2-chloroisopropyl) phosphate (TCPP), cyclopropylmethyl diethyl phosphate, diethyl 3-butenyl phosphate, triphenyl phosphate, tricresyl phosphate and a reaction product of phosphoric acid with ethylene oxide and/or propylene oxide.

**10.** Process according to any of Claims 1 to 9, wherein a component B which contains at least one tin(II) salt of the formula (IX)

$$Sn\ (C_xH_{2x+1}COO)_2 \qquad (IX)$$

where x is an integer from 8 to 24, preferably from 10 to 20, particularly preferably from 12 to 18, is used.

**11.** Process according to any of Claims 1 to 10, wherein 2,4- and/or 2,6-TDI is used as isocyanate component in component C.

**12.** Flexible polyurethane foams having a bulk density in accordance with DIN EN ISO 3386-1-98 in the range from ≥

16 to ≤ 60 kg/$m^3$ obtainable by a process according to any of Claims 1 to 11.

**13.** Use of the polyurethane foams according to Claim 12 for producing furniture upholstery, textile inserts, mattresses, automobile seats, headrests, armrests, sponges and foam sheets for use in automobile components such as roof liners, door trim, seat cushions and components.

## Revendications

**1.** Procédé pour la fabrication de mousses souples en polyuréthane présentant une masse volumique brute, selon la norme DIN EN ISO 3386-1-98, dans la plage de ≥ 16 à ≤ 60 kg/$m^3$ par transformation d'un composant A, le composant A présentant la composition suivante :

A1 ≥ 40 à ≤ 100 parties en poids d'un ou de plusieurs polyéthercarbonatepolyols présentant un indice d'hydroxyle selon la norme DIN 53240 de ≥ 20 mg de KOH/g à ≤ 120 mg de KOH/g,
A2 ≤ 60 à ≥ 0 parties en poids d'un ou de plusieurs polyétherpolyols présentant un indice d'hydroxyle selon la norme DIN 53240 de ≥ 20 mg de KOH/g à ≤ 250 mg de KOH/g et une teneur en oxyde d'éthylène de ≥ 0 à ≤ 60% en poids, les polyétherpolyols A2 étant exempts de motifs carbonate,
A3 ≤ 20 à ≥ 0 parties en poids, par rapport à la somme des parties en poids des composants A1 et A2, d'un ou de plusieurs polyétherpolyols présentant un indice d'hydroxyle selon la norme DIN 53240 de ≥ 20 mg de KOH/g à ≤ 250 mg de KOH/g et une teneur en oxyde d'éthylène > à 60% en poids, les polyétherpolyols A3 étant exempts de motifs carbonate,
A4 ≤ 40 à ≥ 0 parties en poids, par rapport à la somme des parties en poids des composants A1 et A2, d'un ou de plusieurs polyols polymères, PHD-polyols et/ou PIPA-polyols,
A5 ≤ 40 à ≥ 0 parties en poids, par rapport à la somme des parties en poids des composants A1 et A2, de polyols, qui ne relèvent pas de la définition des composants A1 à A4,
B le cas échéant B1) des catalyseurs et/ou B2) des adjuvants et des additifs
C de l'eau et/ou des agents gonflants physiques avec
D des diisocyanates et/ou des polyisocyanates,

la préparation ayant lieu à un indice de ≥ 90 jusqu'à ≤ 120 et toutes les indications de parties en poids des composants A1, A2, A3, A4, A5 étant normalisées de manière telle que la somme des parties en poids A1 + A2 dans la composition vaut 100, **caractérisé en ce que** la préparation a lieu en présence d'un composant K, le composant K étant choisi parmi un ou plusieurs composés du groupe constitué par

K1 les esters d'acides carboxyliques monobasiques ou polybasiques, dont la (première) dissociation présente une valeur de $pk_a$ de 0,5 à 4,0,
K2 les monosulfonates, les disulfonates et les polysulfonates d'alcools monofonctionnels et polyfonctionnels et
K3 un ou plusieurs composés choisis dans le groupe constitué par
K3.1 les esters de l'acide phosphorique, de l'acide phosphonique, de l'acide phosphoreux, de l'acide phosphonique, de l'acide phosphoneux et de l'acide phosphineux, ces esters ne contenant à chaque fois pas de groupe P-OH,
K3.2 les phosphates d'alkyle oligomères de formule générale (II)

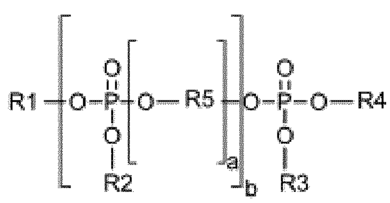

(II)

dans laquelle
a vaut un nombre entier de 1 à 10,

b vaut un nombre entier de 1 à 10,

R1, R2, R3, R4 représentent des groupes alkyle comprenant au moins un atome de C, R1, R2, R3, R4 étant identiques ou différents, indépendamment les uns des autres et
R5 représente un groupe alkylène linéaire comprenant au moins deux atomes de C ou un groupe alkylène ramifié comprenant au moins trois atomes de C et
K3.3 les phosphates d'alkyle oligomères de formule générale (III)

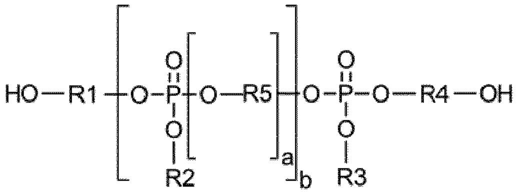
(III),

dans laquelle

a vaut un nombre entier de 1 à 10,
b vaut un nombre entier de 1 à 10,
R1, R4, R5 représentent des groupes alkylène linéaires comprenant au moins deux atomes de C ou des groupes alkylène ramifiés comprenant au moins trois atomes de C, R1, R4, R5 étant identiques ou différents, indépendamment les uns des autres et
R2, R3 représentent des groupes alkyle comprenant au moins un atome de C, R2 et R3 étant identiques ou différents, indépendamment les uns des autres et

et le composant K étant utilisé en une quantité de ≥ 1,0 à ≤ 5,0 parties en poids, toutes les indications de parties en poids du composant K se rapportant à la somme des parties en poids des composants A1 + A2 = 100 parties en poids.

**2.** Procédé selon la revendication 1, le composant K étant utilisé en une quantité de ≥ 2,0 à ≤ 5,0 parties en poids, toutes les indications de parties en poids du composant K se rapportant à la somme des parties en poids des composants A1 + A2 = 100 parties en poids.

**3.** Procédé selon l'une quelconque des revendications 1 ou 2, où on utilise comme composant B B1 des catalyseurs tels que

a) des amines tertiaires aliphatiques, des amines tertiaires cycloaliphatiques, des aminoéthers aliphatiques, des aminoéthers cycloaliphatiques, des amidines aliphatiques, des amidines cycloaliphatiques, de l'urée et des dérivés de l'urée et/ou
b) des sels d'étain (II) d'acides carboxyliques et
B2 le cas échéant des adjuvants et des additifs.

**4.** Procédé selon l'une quelconque des revendications 1 ou 2, où on utilise comme composant B

B1 des catalyseurs et
B2 le cas échéant des adjuvants et des additifs où on utilise comme composant B1,

B1.1 ≥ 0,05 à ≤ 1,5 partie en poids, par rapport à la somme des parties en poids des composants A1 et A2, d'urée et/ou de dérivés de l'urée et
B1.2 ≥ 0,03 à ≤ 1,5 partie en poids, par rapport à la somme des parties en poids des composants A1 et A2, d'autres catalyseurs que ceux du composant B1.2, la teneur en catalyseur aminique dans le composant B1.2 pouvant être au maximum de 50% en poids par rapport au composant B1.

**5.** Procédé selon l'une quelconque des revendications 1 à 4, le composant A étant exempt de composants A3 et/ou A4.

**6.** Procédé selon l'une quelconque des revendications 1 à 5, le composant A comprenant :

A1 ≥ 65 à ≤ 75 parties en poids d'un ou de plusieurs polyéthercarbonatepolyols présentant un indice d'hydroxyle

selon la norme DIN 53240 de ≥ 20 mg de KOH/g à ≤ 120 mg de KOH/g, et
A2 ≤ 35 à ≥ 25 parties en poids d'un ou de plusieurs polyétherpolyols présentant un indice d'hydroxyle selon la norme DIN 53240 de ≥ 20 mg de KOH/g à ≤ 250 mg de KOH/g et une teneur en oxyde d'éthylène de ≥ 0 à ≤ 60% en poids, les polyétherpolyols A2 étant exempts de motifs carbonate,

**7.** Procédé selon l'une quelconque des revendications 1 à 6, le composant A1 comprenant un polyéthercarbonatepolyol, qui peut être obtenu par copolymérisation de dioxyde de carbone, d'un ou de plusieurs oxydes d'alkylène, en présence d'une ou de plusieurs de molécules initiatrices à fonctionnalité H, le polyéthercarbonatepolyol présentant de préférence une teneur en $CO_2$ de 15 à 25% en poids.

**8.** Procédé selon l'une quelconque des revendications 1 à 7, le composant K étant choisi parmi un ou plusieurs composés du groupe constitué par

K1 l'ester méthylique de l'acide oxalique, l'ester éthylique de l'acide oxalique, l'ester éthylique de l'acide malonique et/ou l'ester éthylique de l'acide malonique,
K2 l'ester méthylique de l'acide paratoluènesulfonique et/ou les mélanges d'esters phényliques de l'acide (C10-C21)alcanesulfonique,
K3.1 les triesters de l'acide phosphorique, les tétraesters de l'acide pyrophosphorique, les tétraesters ou les polyesters de l'acide polyphosphorique et d'alcools comprenant 1 à 30 atomes de carbone, ces esters ne comprenant à chaque fois pas de groupe P-OH, ou l'acide phosphorique alcoxylé,
K3.2 les phosphates d'alkyle oligomères de formule générale (II), où a vaut un nombre entier de 1 à 10, b vaut un nombre entier de 1 à 10,
R1, R2, R3, R4 représentent des groupes alkyle en C1 à C6, R1, R2, R3, R4 étant identiques ou différents, indépendamment les uns des autres et
R5 représente un groupe alkylène linéaire comprenant deux à dix atomes de C ou un groupe alkylène ramifié comprenant trois à dix atomes de C,
K3.3 les phosphates d'alkyle oligomères de formule générale (II), où
a vaut un nombre entier de 1 à 10,
b vaut un nombre entier de 1 à 10,
R1, R4, R5 représentent des groupes alkylène linéaires comprenant deux à dix atomes de C ou des groupes alkylène ramifiés comprenant trois à dix atomes de C, R1, R4, R5 étant identiques ou différents, indépendamment les uns des autres et
R2, R3 représentent des groupes alkyle en C1 à C6, R2 et R3 étant identiques ou différents, indépendamment les uns des autres.

**9.** Procédé selon l'une quelconque des revendications 1 à 7, où

K3.1 est choisi parmi un ou plusieurs composés du groupe constitué par l'ester triméthylique de l'acide phosphorique, l'ester triéthylique de l'acide phosphorique, l'ester tripropylique de l'acide phosphorique, l'ester tributylique de l'acide phosphorique, l'ester trioctylique de l'acide phosphorique, l'ester tris(2-éthylhexylique) de l'acide phosphorique, l'ester tris(2-butoxyéthylique) de l'acide phosphorique, le phosphate de tris(2-chloroisopropyle) (TCPP), l'ester cyclopropylméthyldiéthylique de l'acide phosphorique, l'ester diéthyl-3-buténylique de l'acide phosphorique, l'ester triphénylique de l'acide phosphorique, l'ester tricrésylique de l'acide phosphorique et un produit de transformation d'acide phosphorique avec de l'oxyde d'éthylène et/ou de l'oxyde de propylène.

**10.** Procédé selon l'une quelconque des revendications 1 à 9, où on utilise un composant B qui contient au moins un sel d'étain (II) de formule (IX)

$$Sn\ (C_xH_{2x+1}\ COO)_2 \qquad (IX)$$

x signifiant un nombre entier de 8 à 24, de préférence de 10 à 20, de manière particulièrement préférée de 12 à 18.

**11.** Procédé selon l'une quelconque des revendications 1 à 10, du 2,4-TDI et/ou 2,6-TDI étant utilisé(s) comme composant isocyanate dans le composant C.

**12.** Mousses souples de polyuréthane présentant une masse volumique brute selon la norme DIN EN ISO 3386-1-98 dans la plage de ≥ 16 à ≤ 60 kg/$m^3$, pouvant être obtenues par un procédé selon l'une quelconque des revendications

1 à 11.

**13.** Utilisation des mousses souples de polyuréthane selon la revendication 12 pour la fabrication de rembourrages de meubles, de garnitures de textile, de matelas, de sièges automobiles, d’appuie-têtes, d’accoudoirs, d’éponges, de feuilles en mousse destinées à être utilisées dans des pièces pour automobiles, comme par exemple des ciels de toit, des revêtements latéraux de portes, des couvre-sièges et des éléments constitutifs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012130760 A1
- EP 0222453 A
- EP 1359177 A
- WO 2008013731 A
- EP 2115032 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- US 4089835 A
- US 4260530 A
- GB 2072204 A
- DE 3103757 A1
- US 4374209 A
- EP 0176013 A
- EP 0000389 A
- EP 0007502 A
- EP 355000 A


### In der Beschreibung aufgeführte Nicht-Patentliteratur


- **B. INOUE et al.** Copolymerization of Carbon Dioxide and Epoxide with Organometallic Compounds. *Die Makromolekulare Chemie,* 1969, vol. 130, 210-220
- **G. OERTEL.** Kunststoff-Handbuch. Carl-Hanser-Verlag, 1993, vol. VII, 104-127
- **W. SIEFKEN.** *Justus Liebigs Annalen der Chemie,* vol. 562, 75-136
- **VIEWEG ; HÖCHTLEN.** Kunststoff-Handbuch. Carl-Hanser-Verlag, 1993, vol. VII, 139-265
- *CHEMICAL ABSTRACTS,* 108-32-7